# EUROPÄISCHE PATENTSCHRIFT

(11) **EP 1 268 154 B1**
(45) Veröffentlichungstag und Bekanntmachung des Hinweises auf die Patenterteilung: **09.07.2003**
(21) Anmeldenummer: 01915366.7
(22) Anmeldetag: 16.03.2001
(51) Int. Cl.: B29C 44/34, B29C 44/44

(54) **KUNSTSTOFFSCHAUMPRODUKTE AUS BEADS, UND DEREN HERSTELLUNGSVERFAHREN**
PLASTIC FOAM PRODUCTS CONSISTING OF BEADS, AND THEIR MANUFACTURING PROCESS
PRODUITS DE MOUSSE REALISES A PARTIR DE PERLES, ET LEUR PROCEDE DE FABRICATION

(30) Priorität: 04.04.2000 DE 10016671
(43) Veröffentlichungstag der Anmeldung: 02.01.2003
(73) Patentinhaber: Gefinex Polymerschäume GmbH, 33803 Steinhagen (DE)
(72) Erfinder: BRUNING, Jürgen, 99885 Ohrdruf (DE)
(74) Vertreter: Kaewert, Klaus
(86) Internationale Anmeldenummer: EP0103048
(87) Internationale Veröffentlichungsnummer: WO01074559

(56) Entgegenhaltungen:
- EP-A- 0 434 024
- EP-A- 0 741 002
- WO-A-95/08433

## Beschreibung

Die Erfindung betrifft Kunststoffschaumprodukte aus Beads, sowie ein Verfahren zu deren Herstellung. Beads sind Schaumstoffpartikel kleiner Abmessungen. Dabei können diverse Kunststoffe Anwendung finden, z.B. Polystyrol (PS), Polyethylen (PE) oder Polypropylen (PP). Die Beads können kugelige oder andere Formen aufweisen. Die Beadsformen werden zum Teil durch die Herstellung bestimmt. Unabhängig von der Form wird in der Regel vom Beadsdurchmesser zur Kennzeichnung der Beadsgröße gesprochen. Üblich sind Beadsdurchmesser von 0,5 bis 6 mm. Das schließt kleinere und größere Beads nicht aus. Grundsätzlich wird bei der Beadsherstellung zwischen der Herstellung im Autoklaven und der Extrusionsherstellung unterschieden. Nach der Herstellung werden die Beads in Silos oder anderer geeigneter Weise bevorratet, bevor eine Anwendung stattfindet.
Die Beads werden in einer Form, dem sogenannten Formteilautomaten zusammengefügt. Das geschieht durch Erwärmung der Beads an den Oberflächen bis zu einer mehr oder weniger intensiven Plastifizierung und durch Zusammendrücken. Bei ausreichendem Aufschmelzen der Oberfläche und Druck verschweißen die Beads miteinander. Bei weniger starkem Aufschmelzen und Druck entsteht gegebenenfalls eine noch ausreichende Verklebung/Versinterung.

Die Erwärmung bewirkt nicht nur das Aufschmelzen der Oberfläche sondern auch eine Ausdehnung. Die Ausdehnung ist von Art und Umfang des in den Beads eingeschlossenen Gases abhängig. Die Ausdehnung trägt zum Druckaufbau bei.
Im übrigen entsteht üblicherweise der Druck dadurch, daß die Beads mit Druck in den Formhohlraum des Formteilautomaten eingetragen werden und daß der Hohlraum vollständig gefüllt wird.

Zum Eintragen der Beads eignet sich ein gasförmiges Medium, insbesondere Transportluft. Transportluft ist unbeschränkt verfügbar. Zur Erzeugung von Transportluft ist ein Gebläse ausreichend. Das Gebläse zieht Umgebungsluft an und drückt diese Luft durch eine Rohrleitung in den Formhohlraum des Formteilautomaten. Auf dem Weg zum Formhohlraum zieht die Transportluft unten aus einem Silo die gewünschte Beadsmenge ab.

In dem Formhohlraum findet eine Trennung der Beads von der Transportluft statt. Die Beads werden von den Wänden des Formteilautomaten aufgehalten, während die Transportluft durch Öffnungen in den Wänden entweicht.

Nach ausreichender Füllung wird die Eintragöffnung der Form geschlossen. Anschließend wird Heißdampf durch entsprechende Düsen in den Formhohlraum geblasen. Der Heißdampf strömt zwischen den Beads zur gegenüberliegenden Seite des Formhohlraumes und tritt dort aus.

Ein solches Verfahren ist z.B. aus der WO-A-95 08 433 bekannt.

Bei den Kunststoffschaumprodukten wird eine möglichst glatte Oberfläche angestrebt. Das hat in der Regel ästhetische Gründe, aber auch andere Gründe, z.B. hygienische Gründe. Glatte Flächen sind wesentlich reinigungsfreundlicher als rauhe Flächen. Das hat im Gesundheitsbereich und im Lebensmittelbereich erhebliche Bedeutung.

Einen der Hauptanwendungsbereiche für Kunststoffschaumprodukte bilden Kraftfahrzeuge. Im Fahrzeuginnenraum gibt es diverse Anwendungen im Türbereich, im Armaturenbereich, im Bereich der Ablage, im Bereich der Ablage hinter den Rücksitzen.
Auch im Kofferraum finden Kunststoffschaumprodukte Anwendung; ferner im Bereich der Stoßfänger.

Immer wieder wird bei Fahrzeugen eine störende Geräuschentwicklung beanstandet. Es handelt sich um Quietschen. Der Erfinder hat erkannt, daß die Geräusche von den Kunststoffschaumprodukten ausgehen. Das Quietschen entsteht durch Reibung der Kunststoffschaumprodukte an anderen Fahrzeugteilen. Ursache für die Reibung sind Schwingungen, Vibrationen und Verwindungen des Fahrzeuges.

Der Erfindung liegt deshalb die Aufgabe zugrunde, die Geräuschentwicklung von Kunststoffschaumprodukten reduzieren und ggfs. ganz zu beseitigen.

Nach der Erfindung wird das mit Hilfe von Kunststoffschaumprodukten gemäß Anspruch 1 erreicht.

Dem liegt die Überlegung zugrunde, daß der Kunststoffschaum bei einer Bewegung im Berührungsbereich mit einem Gegenstand eine andere Bewegung ausführt. Bei einer z.B. gleichförmigen Hauptbewegung des Kunststoffschaumkörpers führen die Beads an der Reibungsfläche eine Bewegung in kurzen Rucken aus. Das wird auf ein Wechselspiel zwischen Haftreibung und Nachgiebigkeit des Kunststoffschaumes zurückgeführt. Der Kunststoffschaum ist anders als andere Materialien von hoher Nachgiebigkeit. Zugleich besitzt der Kunststoffschaum erhebliche Reibungsbeiwerte. Aufgrund der hohen Reibungsbeiwerte und der hohen Nachgiebigkeit werden einzelne Beads festgehalten, bis sich an den Beads ausreichend hohe Kräfte aufgebaut haben, welche die Reibungskräfte überwinden. Dann schnellen diese Beads in allgemeiner Bewegungsrichtung nach vorn, bis sie wieder an den Reibungsflächen zur Ruhe kommen. Danach beginnt wieder die Beadsverformung in dem jeweiligen Oberflächenbereich.

Als Maß für die Quietschneigung von Kunststoff wird eine Gleitkraftampflitude herangezogen. Die Gleitkraftampflitude wird definiert als die Differenz aus den minimalen und maximalen Kräften, die benötigt werden, um eine gleitende Bewegung von konstanter Relativgeschwindigkeit zwischen einem Kunststoffschaumprodukt und einem Körper aufrecht zu erhalten. Die Höhe der Gleitkraftamplitude wird bestimmt durch die Differenz zwischen Haft- und Gleitreibung während einer dynamischen Reibbewegung. Je geringer die Gleitkraftamplitude ist, desto geringer ist die Neigung des Materials, bei reibender Gleitbewegung zu quietschen oder andere Geräusche zu verursachen.
Weiteren Einfluß auf das Gehäusverhalten hat die Frequenz der Schwingung, also des periodischen Wechsels von Haft- und Gleitreibung. Eine geringe Frequenz wird weniger oder nicht wahrgenommen, während höhere Frequenzen mehr als störend empfunden werden.

Nach der Erfindung wird die Nachgiebigkeit der Kunststoffschaumprodukte an der Oberfläche erhöht. Das geschieht durch Pickel. Im Sinne der Erfindung sind Pickel besonders nachgiebige Erhebungen an der Reibungsfläche der Schaumprodukte. Die Pickel haben einen anderen, nämlich längeren Verformungsweg als die sonst glatten Beads in der Oberfläche. Je nach Situation werden die Geräusch verursachenden Bewegungen ganz verhindert. Oder es kommt zu sehr viel längeren Bewegungen und die daraus resultierenden Luftschwingungen sind von anderer, tieferer Frequenz. Das menschliche Ohr empfindet diese Schwingungen nicht als störend.

Pickel an der Oberfläche des Kunststoffschaumprodukte sind außerdem geeignet, das Ansteigen der Quietschneigung über eine längere Reibbeanspruchung zu vermindern, zu verhindern oder die Quietschneigung sogar zu verringern. Dagegen nimmt die Quietschneigung an Kunststoffschaumprodukten ohne Pickel nach längerer Reibbeanspruchung zu, da Erweichen, Verformen oder Verschleiß an der nicht mit Pickeln ausgestatteten Oberfläche zu einer Erhöhung der Gleitkraftamplitude führen.

Vorteilhafterweise sind die erfindungsgemäßen Pickel auch in vergleichbaren anderen Reibungslagen wie beim Kraftfahrzeug einsetzbar.

Die erfindungsgemäßen Pickel können die Form von Kegeln haben, Spitzkegeln und/oder Kegelstümpfen. Die Pickel können auch die Form von Halbkugeln oder Kugelkalotten haben. Die Grundfläche der Pickel kann rund und/oder eckig sein. Es sind unter anderem dreieckige oder viereckige Grundflächen möglich, ferner runde oder ovale Grundflächen. Von erheblichem Einfluß sind die Abmessungen der erfindungsgemäßen Pickel. Vorzugsweise ist
der Abstand der Pickel voneinander **0,003 bis 3** mm, vorzugsweise **0,03 bis 0,3** mm und/oder
die Höhe der Pickel **0,001 bis 1** mm, vorzugsweise **0,01 bis 0,1** mm und/oder
der Durchmesser an der Grundfläche **0,001 bis 5** mm, vorzugsweise **0,01 bis 0,5** mm
Mit Durchmesser ist der jeweils größte Durchmesser gemeint, der an einer Pickelbasisfläche meßbar ist.
Die Neigung der Kegelmantelfläche von kegelförmigen Pickeln zur Vertikalen kann gering sein, auch gegen Null gehen, so daß die Pickel annähernd strangförmig sind. Die Neigung kann auch stark sein, z.B. **45** Grad und mehr.

Die Erfindung umfasst auch ein Verfahren gemäß Anspruch 8 zur Herstellung der erfindungsgemäßen Kunststoffschaumprodukte.

Die erfindungsgemäßen Pickel können dadurch erzeugt werden, daß die Formteilautomaten im Formhohlraum an der Innenfläche entsprechend geformt sind, also Vertiefungen besitzen, in die sich Beads eindrücken.
Alternativ schlägt die Erfindung vor, die Formteilantomatenflächen mit Geweben auszukleiden, die eine der gewünschten Pickelform angepaßte Maschenweite und Gesamtdicke bzw. Fadendicke besitzen. In die Maschen drücken sich die Beads ein. Dabei bestimmt die Maschenweite die Pickelgrundfläche, die Textilgesamtdicke die Pickelhöhe und die Fadendicke den Pickelabstand. Die Textilien haben zudem verfahrenstechnische Vorteile, auf die unten noch eingegangen wird.
Alternativ werden zu den Textilien Bleche vorgeschlagen, die gleichermaßen gestaltete Öffnungen, Abstände und Dicke aufweisen.

Es ist von Vorteil, die Textilien wie auch die Bleche mit einem Gewebe zu unterlegen/abzustützen. Die Gewebeschichten bilden eine Vielzahl von Kanälen bzw. Öffnungen, durch die Luft und Heißdampf entweichen können und durch die auch Heißdampf zugeführt werden kann. Vorteilhafterweise verteilen die Gewebe den Heißdampf sehr fein. Das bewirkt eine extrem gute Durchströmung des Formhohlraumes mit Heißdampf.

Überraschenderweise ist der ausströmseitige Kondensatanfall aus dem Heißdampf bei der erfindungsgemäßen Verwendung von Geweben sehr viel kleiner als in herkömmlichen Formteilautomaten. Der Kondensatanfall beeinträchtigt sonst die Qualität der Produkte.
Die vorteilhafte Heißdampfführung verbessert auch die Zykluszeiten. Diese können verkürzt werden.

Die Maschenweite des Gewebes ist immer deutlich kleiner als der jeweilige Beadsdurchmesser, mindestens um **50%** und vorzugsweise 75% kleiner oder noch kleiner. Das Gewebe kann ein Textil oder auch ein Metallgewebe sein.
Günstig sind Drahtgewebe aus Stahl, insbesondere mehrschichtige Drahtgewebe und mit Edelstahl bildenden Legierungsanteilen wie Chrom, Nickel und Molybdän.
Die Gewebeschichten werden von der Formhohlrauminnenwand weg (im unteren Bereich) vorzugsweise immer grobmaschiger und/oder dicker und/oder erfüllen dort eine Stütz- bzw. Tragfunktion.
Die Gesamtdicke der Gewebeschicht kann durch den notwendigen Luft/Dampfdurchtritt und/oder durch die Stabilität beeinflußt werden. Je dicker die Fasern/Drähte sind und je größer die Maschenweiten sind, desto besser kann der Heißdampf durchströmen. Die Dicke beträgt vorzugsweise bis **15** mm, insbesondere **3 bis 5** mm.

Wahlweise liegen die Gewebe auf einer geschlossenen Wand oder auf einer mit Durchtrittsöffnungen versehenen Wand auf und/oder sind die Gewebe ganz oder teilweise selbsttragend ausgebildet und/oder liegen ganz oder teilweise an tragenden Flächen des Formteilautomaten an.
Wahlweise ist das Gewebe plattenförmig, eben oder geformt. Eine Form kann auch aus Gewebesegmenten zusammengesetzt sein.

Die Verformung metallischer Gewebe kann mittels einer geeigneten Presse erreicht werden. Die Verformung wird wesentlich erleichter, wenn die metallischen Gewebe erwärmt werden.

Die Gewebeschichten werden einzeln oder gemeinsam verformt. Die nacheinander verformten Gewebeschichten werden vorzugsweise miteinander verbunden. Günstig ist eine Versinterung metallischer Gewebe. Wahlweise ist auch eine Verschweißung oder eine Verbindung mit warmfestem Kleber möglich

Die entstandenen Pickel werden wahlweise in einem Arbeitsgang in dem Formteilautomaten, vorzugsweise anschließend mit Heißgas beaufschlagt, so daß die Pickeloberfläche anschmilzt und geringere Reibungswerte hat.

In der Zeichnung ist ein Ausführungsbeispiel der Erfindung dargestellt.

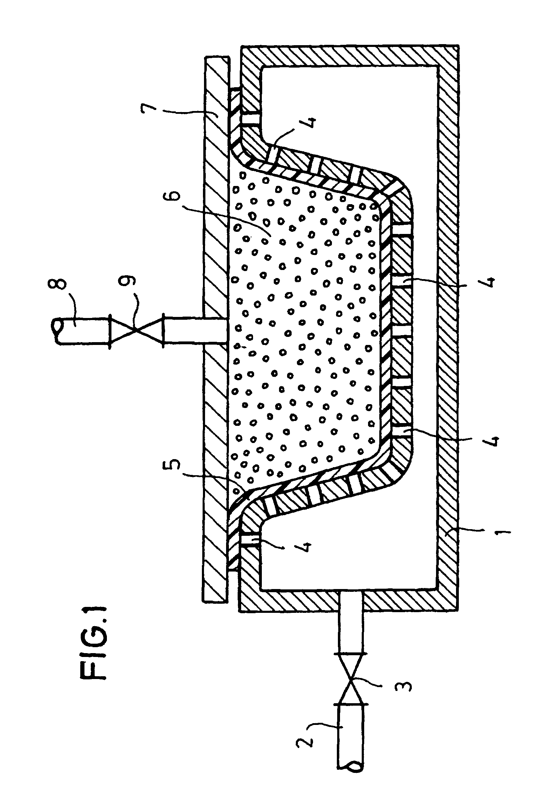

Die Fig. 1 zeigt die Form eines Formteilautomaten, bestehend aus einem Unterteil 1 und einem Oberteil 7 mit einer zwischenliegenden Dichtung 10 am Rand. Das Unterteil 1 ist mit einer Drahtgewebeschicht 5 versehen.

Nach Schließen der Form wird der Formhohlraum durch eine Leitung 2 unter Öffnung eines Ventils 3 mit Unterdruck beaufschlagt. Der Unterdruck wird durch Abpumpen der Luft erzeugt.
Zugleich fließt Druckluft durch Öffnen eines Ventils 9 durch eine Leitung 8 nach. Mit der Luft werden Beads eingetragen. Die Beads haben einen Durchmesser von 3mm und bestehen aus PP. Der Luftdruck beträgt 6 bar.

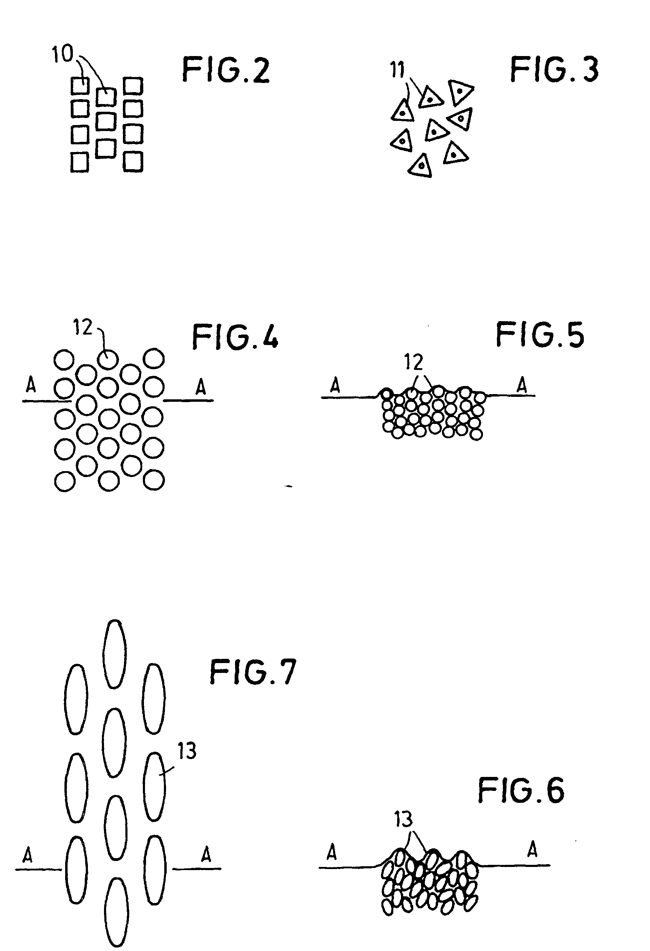

Die Druckluft strömt durch die Gewebeschicht 5 ab. Die Gewebeschicht 5 nimmt die Druckluft in optimaler Weise auf und leitet sie zu Öffnungen 4 in dem Unterteil 1.
Die Gewebeschicht 5 ist zweischichtig und aus Draht. Jede Schicht hat eine unterschiedliche Maschenweite. Die beadsseitige Gewebeschicht hat eine wesentlich geringere Maschenweite als die unterteilseitige Gewebeschicht. Im Ausführungsbeispiel **0,2** mm. Die Fig. 2 zeigt die beadsseitige Gewebeschicht in einer vergrößerten Draufsicht. Die Stahldrähte liegen übereinander. Fig. 3 zeigt den Querschnitt durch das beadsseitige Drahtgewebe. In der Unterlage bilden die Drähte 11 und 12 Bögen 13, so daß beadsseitig eine ebene (abgesehen von der in Fig. 1 gezeigten Kontur der Gewebeschicht und abgesehen von den Maschen) Fläche entsteht.

Die in Fig. 1 gezeigte Kontur entsteht durch Verformung in einer geeigneten Presse.

Nach vollständiger Füllung des Formhohlraumes wird statt der Luft Heißdampf durch die Leitung 8 in den Formhohlraum gedrückt. Der Heißdampf muß durch die Beads hindurchströmen. Dabei wird die Luft zwischen den Beads verdrängt. Durch den Dampf erwärmen sich die Beads. Deren Oberfläche plastifiziert.

Durch die Erwärmung expandieren die Beads. Aufgrund der plastifizierten Außenfläche der Beads und aufgrund des Druckes kommt es an allen Berührungsstellen zwischen den Beads zu einer Verschweißung. Zugleich schließen sich die Zwickelräume zwischen den Beads.

Das fertige Produkt 6 wird nach ausreichender Abkühlung nach Öffnen der Form aus dem Formhohlraum entnommen.

An der Oberfläche besitzt das Produkt 6 Pickel, die dadurch entstanden sind, daß Beads teilweise in die Maschen des Gewebes gedrückt worden sind. Die Pickel sind in Fig. 2 in der Draufsicht dargestellt und sind ein Spiegelbild des Drahtgewebes. Der Durchmesser der Beads beträgt **0,2** mm, der Abstand **0,3** mm, die Höhe **0,5** mm

Fig. 3 zeigt Pickel 11 mit dreieckiger Grundfläche. Fig. 4 und 5 zeigen runde Pickel 12, Fig. 6 und 7 ellipsenförmige Pickel 13.

## Patentansprüche

1. Kunststoffschaumprodukte aus Beads, insbesondere für Kraftfahrzeuge, mit an der Oberfläche angeformten, Reibungsgeräusch mindernden Pickeln (10,11,12,13).

2. Kunststoffschaumprodukte nach Anspruch 1, **dadurch gekennzeichnet, daß** die Pickel in ihren Abmessungen und in ihrem Abstand und/oder die zugehörigen Reibungsflächen solange verändert werden, bis die Gleitkraftamplitude ein gewünschtes geräuschminderndes Maß erreicht hat.

3. Kunstoffschaumprodukte nach Anspruch 1 oder 2, **dadurch gekennzeichnet, daß** die Pickel in ihren Abmessungen und in ihrem Abstand und/oder die zugehörige Reibungsflächen solange verändert werden, bis die Frequenz von Schwingungen während dynamischer Reibbewegungen ein gewünschtes geräuschminderndes Maß erreicht hat.

4. Kunststoffschaumprodukte nach einem der Ansprüche I bis 3, **gekennzeichnet durch** Pickel mit folgenden Abmessungen
a) Höhe von **0,001 bis 1** mm, vorzugsweise **0,01** bis **0,1** mm
b) Abstand von **0,003 bis 3** mm, vorzugsweise **0,03 bis 0,3** mm
c) Durchmesser am Fuß von **0,001 bis 5** mm, vorzugsweise **0,01 bis 0,5** mm

5. Kunststoffschaumprodukte nach einem der Ansprüche 1 bis 4, **gekennzeichnet durch** runde und/oder eckige Pickel (10,11,12,13).

6. Kunststoffschaumprodukte nach Anspruch 5, **gekennzeichnet durch** kegelförmige, pyramidenförmige oder kegelstumpfförmige Pickel.

7. Kunststoffschaumprodukte nach einem oder mehreren der Ansprüche 1 bis 6, **gekennzeichnet durch** eine angeschmolzene Oberfläche.

8. Verfahren zur Herstellung der Produkte nach einem der Ansprüche 1 bis 7, durch Verwendung eines Formteilautomaten mit einem Fomhohlraum, in den die Beads eingetragen und mit einem gasförmigen Wärmeträger, insbesondere Heißdampf, beaufschlagt werden, wobei der gasförmige Wärmeträger aus einer Formteilautomatenfläche in den Formhohlraum eintritt und durch eine andere Formteilautomatenfläche wieder austritt, wobei der Formhohlraum an den Pickeln entsprechend formgebende Ausnehmungen aufweist.

9. Verfahren nach Anspruch 8, **gekennzeichnet durch** die Verwendung von Geweben und/oder oder gelochten Blechen an den Innenflächen des Formhohlraumes, wobei die Maschen der Gewebe bzw. die Öffnungen sich als Pickel abbilden.

10. Verfahren nach Anspruch 9, **gekennzeichnet durch** Verwendung eines Gewebes (5) aus einem Textil oder aus Metall und/oder aus Draht (11,12) ist und/oder duch Verwendung eines Gewebes, das mehrschichtig ist und/oder ganz oder teilflächig sebsttragend ausgebildet ist und/oder ganz oder teilweise an einer tragenden Formteilwand anliegt und/oder eine Dicke bis 15mm, vorzugsweis 3 bis 5mm, besitzt und/oder dessen Maschenweite höchstens gleich dem halben Beadsdurchmesser ist und/oder der Kontur des Formhohlraumes angepaßt ist.

11. Verfahren nach Anspruch 9 oder 10, **gekennzeichnet durch** Verwendung eines Drahtgewebes dessen Maschenweite in der den Beads abgewandten Gewebeschichten zunimmt und/oder im unteren Bereich als Stütz- bzw. Tragschicht ausgebildet ist und/oder aus Edelstahl ist und/oder aus miteinander verschweißten oder versinterten oder verklebten Gewebeschichten besteht.

12. Verfahren nach einem der Ansprüche 1 bis 11, **gekennzeichnet durch** eine Heißgasbeaufschlagung der Pickel nach dem Entfernen der Produkte aus dem Formteilautomaten.

## Claims

1. Foamed plastic products from beads, particularly for automobiles, with shaped protrusions (10, 11, 12, 13) on the surface that reduce frictional noise.

2. Foamed plastic products according to Claim 1 **characterised in that** the dimensions of and the distances between the protrusions and/or the corresponding rubbing surfaces are varied such that the slip force amplitude produces a desired level of noise reduction.

3. Foamed plastic products according to Claim 1 or 2 **characterised in that** the dimensions of and the distances between the protrusions and/or the corresponding rubbing surfaces are varied such that the frequency of the oscillations during the dynamic rubbing movements produces a desired level of noise reduction.

4. Foamed plastic products according to one of Claims 1 to 3 **characterised in that** the protrusions have the following dimensions
a) height from 0.001 to 1mm, preferably 0.01 to 0.1mm
b) spacing from 0.003 to 3mm, preferably 0.03 to 0.3mm
c) diameter at the base from 0.001 to 5mm, preferably 0.01 to 0.5mm.

5. Foamed plastic products according to one of Claims 1 to 4 **characterised by** round and/or angular protrusions (10, 11, 12, 13).

6. Foamed plastic products according to Claim 5 **characterised by** conical, pyramidal or truncated conical shaped protrusions.

7. Foamed plastic products according to one or more of Claims 1 to 6 **characterised by** a melted-on surface.

8. Process for the production of products according to one of Claims 1 to 7 by the use of a moulding machine equipped with a cavity mould into which the beads are introduced and contacted with a gaseous heat transfer medium, in particular superheated steam, whereby the gaseous heat transfer medium enters the cavity mould from one wall of the moulding machine and subsequently exits through another wall of the moulding machine, whereby the cavity mould has shaped cavities which correspond to the shape of the protrusions.

9. Process according to Claim 8 **characterised by** the use of a woven fabric layer and/or a perforated sheet metal on the inner surface of the cavity mould, whereby the mesh of the woven fabric layer or the perforations create the shape of the protrusions.

10. Process according to Claim 9 **characterised by** the use of a woven fabric layer (5) from a textile or from a metal and/or from wire (11, 12) and/or by the use of a woven fabric that is multi layer and/or fully or partially self supporting and/or fully or partially laid against a supporting mould wall and/or has a thickness up to 15mm, preferably 3 to 5mm and/or which fits to the contour of the cavity mould.

11. Process according to Claim 9 or 10 **characterised by** the use of a woven wire mesh construction whose layers have increasing mesh sizes the further they are from the beads and/or which in the under layers comprise a reinforcing or supporting layer and/or is of stainless steel and/or is constructed from woven fabric layers that are welded, sintered or glued together.

12. Process according to one of Claims 1 to 11, **characterised by** contacting the protrusions with hot gas after removal of the products from the moulding machine.

## Revendications

1. Produits alvéolaires en matière synthétique, composés de perles, en particulier pour des véhicules automobiles, avec des reliefs (10, 11, 12, 13), formés d'un seul tenant sur la surface, diminuant le bruit de frottement.

2. Produits alvéolaires en matière synthétique selon la revendication 1, **caractérisés en ce que** l'on modifie les reliefs, quant à leurs dimensions et leur espacement et/ou les surfaces de frottement afférentes, jusqu'à ce que la valeur de la force de glissement atteigne un niveau produisant une diminution souhaitée du bruit.

3. Produits alvéolaires en matière synthétique selon la revendication 1 ou 2, **caractérisés en ce que** l'on modifie les reliefs quant à leurs dimensions et à leur espacement et/ou aux faces de frottement afférentes, jusqu'à ce que la fréquence des vibrations, se produisant pendant les déplacements dynamiques avec frottement, atteignent une diminution de niveau souhaitée du bruit.

4. Produits alvéolaires en matière synthétique selon la revendication 1 à 3, **caractérisés par** des reliefs ayant les dimensions suivantes :
a) hauteur de 0,001 à 1 mm, de préférence de 0,01 à 0,1 mm
b) espacement de 0,003 mm 0 3 mm, de préférence de 0,03 à 0,3 mm
c) diamètre, au pied, de 0,001 à 5 mm, de préférence de 0,01 à 0,5 mm.

5. Produits alvéolaires en matière synthétique selon l'une des revendications 1 à 4, **caractérisés par** des reliefs (10, 11, 12, 13) ronds et/ou polygonaux.

6. Produits alvéolaires en matière synthétique selon la revendication 5, **caractérisés par** des reliefs à forme conique, à forme pyramidale, ou à forme tronconique.

7. Produits alvéolaires en matière synthétique selon l'une ou plusieurs des revendications 1 à 6, **caractérisés par** une surface fondant superficiellement.

8. Procédé de fabrication des produits selon l'une des revendications 1 à 7, par utilisation d'un robot de production de pièces moulées, avec un espace creux de moulage, dans lequel les perles sont introduites et sont exposées à un caloporteur gazeux, en particulier de la vapeur chaude, le caloporteur gazeux, venant de la surface du robot production de pièces moulées, pénétrant dans l'espace creux de moulage et ressortant par une autre surface du robot de production de pièces moulées, l'espace creux de moulage présentant des évidements ayant comme rôle de conformer les reliefs de manière correspondante.

9. Procédé selon la revendication 8, **caractérisé par** l'utilisation de tissus et/ou de tôles perforées, sur les faces intérieures de l'espace creux de moulage, les mailles des tissus et/ou les ouvertures se reproduisant sous la forme de reliefs.

10. Procédé selon la revendication 9, **caractérisé par** l'utilisation d'un tissu (5), formé d'un textile ou d'un métal et/ou de fil métallique (11, 12), et/ou par utilisation d'un tissu, à plusieurs couches et/ou autoporteur, en totalité ou bien seulement sur une partie de sa surface, et/ou en appui, en totalité ou partiellement, sur une paroi porteuse de la pièce moulée, et/ou ayant une épaisseur allant jusqu'à 15 mm, de préférence de 3 à 5 mm et/ou dont la largeur de maille est au maximum égale à la moitié du diamètre des perles et/ou est adaptée au contour de l'espace creux de moulage.

11. Procédé selon la revendication 9 ou 10, **caractérisé par** l'utilisation d'un tissu en fil métallique, dont la largeur de maille va en augmentant en allant dans les couches de tissu opposées aux perles et/ou est réalisé, dans la zone inférieure, sous forme de couche d'appui ou de couche support et/ou est formé en acier spécial et/ou de couches de tissu, reliées ensemble par soudage, ou frittage, ou collage.

12. Procédé selon l'une des revendications 1 à 11, **caractérisé par** une exposition aux gaz chauds des reliefs, après enlèvement des produits hors du robot de production de pièces moulées.
